# EUROPEAN PATENT APPLICATION

(11) **EP 3 770 243 A1**
(43) Date of publication of application: **27.01.2021**
(21) Application number: 19827073.8
(22) Date of filing: 07.05.2019
(51) Int. Cl.: C12C 11/02, C12C 11/00

(54) **METHOD FOR PRODUCING FERMENTED BEER-LIKE SPARKLING BEVERAGE, AND METHOD FOR REDUCING OFF-FLAVOR**

(30) Priority: 29.06.2018 JP 2018124460
(71) Applicant: Asahi Group Holdings, Ltd., Tokyo 130-8602 (JP); Asahi Breweries, Ltd., Tokyo 130-8602 (JP)
(72) Inventor: IRIE Taku, Moriya-shi, Ibaraki 302-0106 (JP)
(74) Representative: Cabinet Becker et Associés
(86) International application number: PCT/JP2019/018228
(87) International publication number: WO 2020/003739

(57) **Abstract**

A method for producing a fermented beer-like sparkling beverage is provided, the method involving fermenting, in a fermenter, a fermentation raw material solution to which yeast has been added, wherein the fermentation raw material solution aerated after removing a cold break therefrom in a fermenter is injected into the fermenter dividedly by n injection steps (where n is an integer of 2 or higher), and yeast is added to the fermentation raw material solution to be injected into the fermenter at the first injection step to the (n-1)^{th} injection step.

## Description

### TECHNICAL FIELD

The present invention relates to a method for producing a fermented beer-like sparkling beverage in which the generation of an onion-like off-flavor, which is a kind of off-flavor, is suppressed, as well as a method for reducing off-flavor.

The present invention claims priority on the basis of Japanese Patent Application No. 2018-124460, filed in Japan on June 29, 2018, the contents of which are incorporated herein by reference.

### BACKGROUND OF THE INVENTION

There is a case where off-flavors, such as a burnt smell/light-struck smell-like smell or an onion-like off-flavor, are detectable in fermented beer-like sparkling beverages such as beer or sparkling liquor, and control of such off-flavors is important in order to improve the quality of the fermented beer-like sparkling beverage. 2,3-Epoxy-3-methylbutanal (hereinafter, may be abbreviated as "EMBal") was identified as a precursor of 2-mercapto-3-methyl-1-butanol (hereinafter, may be abbreviated as "2M3MB"), which is a causative substance of an onion-like off-flavor, which is a kind of off-flavor, and a technique for quantification thereof in wort, fermented liquid or beer has been established. 2M3MB is produced from EMBal by a fermentation step due to yeast in the presence of oxygen. EMBal is produced from a precursor thereof in the presence of oxygen (see, for example, Patent Document 1).

In contrast, fermentation is generally conducted in a large-scale fermentation tank having a capacity that allows multiple batches of wort prepared several times to be held for beer brewing in conventional large-scale breweries. Each batch of the wort is transferred to a fermentation tank each time the batch is prepared by each preparation process. In such a "multi-filling fermentation" process, initial fermentation conditions are influenced by conditions of yeast-addition (pitching) to each batch of the wort, aeration thereto and injection thereof, and thus are varied. Such variety may affect the subsequent fermentation process and the quality of the resultant beer. Particularly, changing the timing and amount of yeast-addition to each batch of the wort or aeration thereto, conducted in conformity with the yeast-addition, may alter the production of yeast metabolites in fermentation, thereby altering the flavor properties of the product. Thus, optimization of the "multi-filling fermentation" process is the major problem for many brewers and a number of studies have been reported.

For example, Non-Patent Document 1 discloses that a beer containing a high concentration of alcohol is brewed by adding yeast intensively to the first batch of a wort prepared by the first preparation step, followed by subjecting the second and third batches of the worts prepared by the second and third preparation steps to aeration only in a "multi-filling" process in which the number of injection times is three.

Non-Patent Document 2 discloses that the decrease in a time interval between the steps of injecting a wort prepared at a preparation step into a fermenter in a "multi-filling" process contributes to an increase in the amount of SO₂ generated, thereby enhancing the antioxidant activity of a resultant beer.

Non-Patent Document 3 discloses that the study of effects caused by changing the timing of yeast-addition and aeration on the flavor and the antioxidant activity of a resultant beer reveals that a beer having excellent flavor and antioxidant activity is obtained by subjecting the first batch of a wort prepared by the first preparation step to yeast-addition and aeration intensively in a "multi-filling" process in which the number of injection times is four.

### DOCUMENTS OF RELATED ART

### Patent Documents

Patent Document 1: International Patent Application Publication No. WO 2018/008175

### Non-Patent Documents

Non-Patent Document 1: Yokoyama A et al., "The effect of filling procedures on multi-fill fermentations.", MBAATQ, Vol. 34, No. 1, p320-327, 1997.
Non-Patent Document 2: Forster C et al., "Pitching and filling procedures of cylindro-conical fermentation tanks and its influence on the anti-oxidant activity of beer.", MBAATQ, Vol. 37, No. 1, p59-64, 2000.
Non-Patent Document 3: Tenge C et al., "Effects of different aeration techniques in pitching technology.", Brauwelt international, Vol. 25, No. 2, p86-89, 2007.
Non-Patent Document 4: lijima et al., "Construction and evaluation of self-cloning bottom-fermenting yeast with high SSU1 expression.", Journal of Applied Microbiology, Vol.109, p.1906-1913, 2010.

### SUMMARY OF THE INVENTION

### PROBLEMS TO BE SOLVED BY THE INVENTION

However, none of the Non-Patent Documents 1 to 3 mention production control of 2M3MB.

The amount of precursor EMBal when fermentation starts is reduced by minimizing the supply of oxygen to a wort, thereby decreasing the amount of 2M3MB in a beer-like sparkling beverage. However, fermentation by yeast requires oxygen, and therefore, the decrease in the amount of oxygen supplied to the yeast may cause a delay in extract consumption, which is the main objective of fermentation, and the production of other unpleasant odors accompanying therewith.

The present invention is made in view of the above-mentioned circumstances, and aims to provide a method for producing a fermented beer-like sparkling beverage by which the amount of 2M3MB, which is the main causative substance of onion-like off-flavor, is reduced while maintaining a favorable rate of fermentation by yeast, and a method for reducing off-flavor.

### MEANS TO SOLVE THE PROBLEMS

As a result of intensive research in order to achieve the above-described objective, the inventors of the present invention have discovered that a fermented beer-like sparkling beverage having a reduced amount of 2M3MB, which is the main causative substance of onion-like off-flavor, is obtained while maintaining a favorable yeast fermentation rate, by increasing the yeast concentration at an initial fermentation stage to promote oxygen consumption in a fermentation raw material solution by yeast, and aerating all batches of fermentation raw material solution injected into a fermenter, in a "multi-filling" process, and have completed the present invention.

The present invention encompasses the following embodiments [1] to [11].
[1] A method for producing a fermented beer-like sparkling beverage, including adding a yeast to a fermentation raw material solution, and then fermenting the fermentation raw material solution in a fermenter, wherein
   a cold break is removed from the fermentation raw material solution in a flotation tank, the fermentation raw material solution is aerated, and then the fermentation raw material solution is injected into the fermenter dividedly by n injection steps (n is an integer of 2 or more), and
   the yeast is added to the fermentation raw material solution to be injected into the fermenter at a first injection step to a (n-1)^{th} injection step.
[2] The method for producing a fermented beer-like sparkling beverage according to [1], wherein the fermentation raw material solution to be injected into the fermenter at the first injection step to the (n-1)^{th} injection step is injected into the flotation tank after adding the yeast thereto, and is aerated before injecting into the flotation tank, and before, while, or after adding the yeast thereto.
[3] The method for producing a fermented beer-like sparkling beverage according to [1] or [2], wherein 5% by volume to 9% by volume of air, relative to the flow rate of the fermentation raw material solution, is injected into the fermentation raw material solution by aerating the fermentation raw material solution after removing the cold break and before injecting into the fermenter.
[4] The method for producing a fermented beer-like sparkling beverage according to any one of [1] to [3], wherein n is an integer of at least 3.
[5] The method for producing a fermented beer-like sparkling beverage according to any one of [1] to [4], wherein the amounts of the fermentation raw material solution to be injected into the fermenter at the first injection step to an n^{th} injection step are substantially equal amounts.
[6] The method for producing a fermented beer-like sparkling beverage according to any one of [1] to [5], wherein the amounts of the yeast added to the fermentation raw material solution to be injected into the fermenter at the first injection step to the (n-1)^{th} injection step are substantially equal amounts.
[7] The method for producing a fermented beer-like sparkling beverage according to any one of [1] to [6], wherein a time interval between the steps of injecting the fermentation raw material solution into the fermenter is 5 hours or less.
[8] A method for reducing an off-flavor from a fermented beer-like sparkling beverage, including: removing a cold break from a fermentation raw material solution in a flotation tank; aerating the fermentation raw material solution from which the cold break is removed; injecting the fermentation raw material solution, which is aerated, into the fermenter dividedly by n injection steps (n is an integer of 2 or more); and adding a yeast to the fermentation raw material solution to be injected into the fermenter at the first injection step to the (n-1)^{th} injection step.
[9] The method for reducing an off-flavor from a fermented beer-like sparkling beverage according to [8], wherein the fermentation raw material solution to be injected into the fermenter at the first injection step to the (n-1)^{th} injection step is injected into the flotation tank after adding the yeast thereto, and is aerated before injecting into the flotation tank, and before, while, or after adding the yeast thereto.
[10] The method for reducing an off-flavor from a fermented beer-like sparkling beverage according to [8] or [9], wherein a causative substance of the off-flavor is 2-mercapto-3-methyl-1-butanol.
[11] The method for reducing an off-flavor from a fermented beer-like sparkling beverage according to [10], wherein an amount of the 2-mercapto-3-methyl-1-butanol in the fermented beer-like sparkling beverage, relative to the total mass of the fermented beer-like sparkling beverage, is reduced to 0.4 ppb or less.

### EFFECTS OF THE INVENTION

The method for producing a fermented beer-like sparkling beverage and the method for reducing an off-flavor from a fermented beer-like sparkling beverage make it possible to reduce the amount of a substance having an off-flavor caused by fermentation while maintaining a favorable rate of fermentation by yeast, and thus to obtain a fermented beer-like sparkling beverage having a reduced amount of 2M3MB, which is the main substance causing an onion-like off-flavor.

### BRIEF DESCRIPTION OF DRAWINGS

Fig. 1 is a schematic configuration diagram indicating a part of one embodiment of a beer brewing device used in the method for producing a fermented beer-like sparkling beverage according to the present embodiment.
Fig. 2A is a graph showing the amount of dissolved oxygen (DO) (ppm) in a fermentation raw material solution in a fermenter measured each time the injection of each prepared fermentation raw material solution of Example 1 and Comparative Example 1-1 in Test Example 1 was completed.
Fig. 2B is a graph showing the amount of dissolved oxygen (DO) (ppm) in a fermentation raw material solution in a fermenter measured each time the injection of each prepared fermentation raw material solution of Example 2 and Comparative Example 1-2 in Test Example 1 was completed.

### EMBODIMENTS FOR CARRYING OUT THE INVENTION

In the present specification, the term "fermented beer-like sparkling beverage" refers to a sparkling beverage produced through a fermentation step, which has a flavor, taste and texture equivalent to or similar to that of beer regardless of alcohol content or use/non-use of malt, and has a high thirst-quenching sensation as well as drinkability. That is, the fermented beer-like sparkling beverage may be an alcoholic beverage, or may be a so-called non-alcoholic beverage or low-alcoholic beverage having an alcohol content of less than 1% by volume. Further, the fermented beer-like sparkling beverage may be a beverage using malt as a raw material, or a beverage not using malt as a raw material. Specific examples of the fermented beer-like sparkling beverage include beer, sparkling liquor using malt as a raw material, sparkling alcoholic beverage not using malt, low-alcohol sparkling beverage, and non-alcoholic beer. Additional examples thereof include liqueurs obtained by blending beverages produced through a fermentation step using malt raw materials with alcohol-containing distillates.

The term "alcohol-containing distillate" refers to a solution containing an alcohol obtained by a distillation step, the alcohol-containing distillate may be an alcohol as a raw material, and examples thereof include distilled alcoholic beverages such as spirits, whiskey, brandy, vodka, rum, tequila, gin, and shochu.

### «Method for producing fermented beer-like sparkling beverage»

The method for producing a fermented beer-like sparkling beverage according to the present embodiment (hereinafter, may be abbreviated as "production method according to the present embodiment") is a method in which fermentation by yeast is conducted in a cylindro-conical tank having a capacity allowing multiple batches of fermentation raw material solution to be held, a single batch being prepared by a single preparation step.

The fermentation raw material solution prepared in a preparation tank is injected into the fermenter each time the fermentation raw material solution is prepared. Hereinafter, the fermentation raw material solution to be injected into the fermenter at the X^{th} injection step (X is an integer of 1 or more) may be referred to as the "X^{th} batch", for example, the fermentation raw material solution at the first injection step may be referred to as the "first batch".

It is known that in a "multi-filling" process, the total amount of the yeast required by a single fermentation step in the fermenter may be added to the fermentation raw material solution by a single addition step, or may be added dividedly to all batches in equal amounts (hereinafter, may be referred to as "yeast equivalent addition method") (Non-Patent Documents 1 to 3).

In contrast, in a "multi-filling" process in which the fermentation raw material solution is injected into the fermenter dividedly by n injection steps in the production method according to the present embodiment, the yeast is added to the first batch to the (n-1)^{th} batch, but the yeast is not added to the n^{th} batch. Thus, the amount of the yeast in the fermenter at an initial fermentation stage can be increased in comparison with that in a yeast equivalent addition method, and oxygen consumption by the yeast is promoted, thereby reducing the dissolved oxygen in the fermentation raw material solution. Accordingly, the amount of oxygen used to generate EMBal is reduced, thereby finally suppressing the production of 2M3MB.

In the production method according to the present embodiment, all of the first batch to the n^{th} batch are subjected to aeration. A sufficient amount of dissolved oxygen required by the yeast to maintain favorable fermentation can be secured in the fermentation raw material solution in the fermenter by aerating the n^{th} batch to which the yeast is not added. The fermentation rate can be maintained to be favorable by supplying a sufficient amount of oxygen to the yeast during fermentation. In addition, an excessive increase in an acetic acid ester due to the decrease in the supply of oxygen to the yeast and a change in generation of aroma components, such as substances causing unpleasant odors, can be suppressed.

Thus, the production method according to the present embodiment makes it possible to reduce the dissolved oxygen in the fermentation raw material solution at an initial fermentation stage to suppress the generation of both EMBal and 2M3MB while maintaining an extract consumption activity of the yeast during fermentation to maintain a favorable fermentation rate, by adding the total amount of the yeast to the first batch to the (n-1)^{th} batch to be aerated, and subjecting the n^{th} batch only to aeration. The 2M3MB is a substance causing an onion odor, which is an off-flavor, and the onion-like off-flavor is enhanced depending on the amount of 2M3MB. That is, the production method according to the present embodiment makes it possible to produce a fermented beer-like sparkling beverage in which the amount of 2M3MB is small and an onion-like off-flavor is suppressed. In addition, the production method according to the present embodiment makes it possible to suppress the generation of a substance causing an unpleasant odor, which is an off-flavor, due to a fermentation failure. Thus, the production method according to the present embodiment makes it possible to obtain a fermented beer-like sparkling beverage in which an off-flavor is reduced. That is, the production method according to the present embodiment may be considered to be a method for reducing an off-flavor from a fermented beer-like sparkling beverage.

The amount of 2M3MB in the fermented beer-like sparkling beverage finally obtained by the production method according to the present embodiment, relative to the total mass of the fermented beer-like sparkling beverage, is preferably 0.5 ppb or less, more preferably 0.4 ppb or less, even more preferably 0.1 ppb or less, and particularly preferably 0 ppb (less than the detection limit). In the present specification, "ppb" means "µg/L". The amount of 2M3MB in the fermented beer-like sparkling beverage may be measured in accordance with the method of Iijima et al., (see Non-Patent Document 4). Specifically, the amount may be measured in accordance with the following method. p-Hydroxy mercury benzoic acid, tert-butyl-4-methoxyphenol dissolved in tris buffer, and a solution of 4-methoxy-2-methyl-2-mercaptobutane are added to a sample, and then the mixture is sealed and stirred at room temperature to allow a sulfur-containing compound in the sample to bind with the p-hydroxy mercury benzoic acid. The solution of 4-methoxy-2-methyl-2-mercaptobutane is added as an internal standard substance. Then, the sulfur-containing compound is eluted with a sodium acetate buffer (pH 6) containing L-cysteine hydrochloride. The resultant eluate is subjected to solvent extraction using a solution of ethyl acetate and dichloromethane, followed by subjecting the resultant organic solvent layer to dehydration with anhydrous sodium sulfate. After dehydration, the organic solvent layer is concentrated at room temperature under a nitrogen stream, followed by quantifying the sulfur-containing compound contained in the organic solvent layer by GC/MS.

The production method according to the present embodiment will be explained below specifically.

The production method according to the present embodiment may be conducted in a similar manner to that of a general method for producing a fermented beer-like sparkling beverage, except that the addition of yeast and aeration are conducted under particular conditions when a fermentation raw material solution is transferred to a fermenter from a preparation tank in a "multi-filling" process. The production method according to the present embodiment will be explained together with a general production method of a fermented beer-like sparkling beverage. A general fermented beer-like sparkling beverage may be produced by the steps of preparation (preparation of fermentation raw material solution), fermentation, brew storage and filtration.

### [Preparation step]

In the preparation step (preparation step of fermentation raw material solution), a fermentation raw material solution is prepared from at least one selected from the group consisting of cereal raw materials and carbohydrate raw materials. Specifically, first, a mixture containing raw material water and at least one selected from the group consisting of cereal raw materials and carbohydrate raw materials is prepared and heated to saccharify starches such as the cereal raw materials. Only the cereal raw material may be used, or only the carbohydrate raw material may be used, or a mixture thereof may be used, as a raw material of a sugar solution.

Examples of the cereal raw material include barley, wheat, and malts thereof, rice, corn, beans such as soybean, and potatoes. Although the cereal raw material may be used as a cereal syrup, a cereal extract or the like, the cereal raw material is preferably used as a pulverized cereal product obtained by a pulverization process.

The pulverization process of the cereals may be carried out by a conventional method. The pulverized cereal product may be subjected to a treatment which is usually conducted before or after the pulverization treatment, such as a pulverized malt product, corn starch, or corn grit. The pulverized cereal product to be used in the present invention is preferably a pulverized malt product. The use of the pulverized malt product makes it possible to produce a fermented beer-like sparkling beverage having a clearer beer-like taste. The pulverized malt product may be one obtained by germinating barley, such as two-row barley, according to a conventional method, drying it and then pulverizing it to a predetermined particle size.

In addition, one of cereal raw materials may be used alone, or a mixture of plural cereal raw materials may be used, as the cereal raw material to be used according to the present invention. For example, a pulverized malt product may be used as a main raw material and a pulverized product of rice or corn may be used as an auxiliary raw material. Examples of the carbohydrate raw material include sugars such as liquid sugar.

The amount of 2M3MB in the resultant fermented beer-like sparkling beverage can be reduced by controlling the addition of yeast and injection of air when the fermentation raw material solution is transferred to the fermenter, regardless of the type or constitution components of the fermentation raw material. Thus, the production method according to the present embodiment may be applied to a method for producing a fermented beer-like sparkling beverage in which the ratio of malt used (the ratio of used malt, relative to the total of the fermentation raw material) is 100% by mass, or a method for producing a fermented beer-like sparkling beverage in which the ratio of malt used is more than 0% by mass but less than 100% by mass, or a method for producing a fermented beer-like sparkling beverage in which no malt is used as the fermentation raw material.

An additional auxiliary raw material may be added to the mixture containing the fermentation raw material and raw material water. Examples of the auxiliary raw material include hops, dietary fiber, yeast extract, fruit juice, bittering agents, coloring agents, herbs, and fragrance. In addition, a saccharifying-enzyme such as α-amylase, glucoamylase, or pullulanase or an enzymatic agent such as protease may be added, as necessary.

The saccharification treatment is carried out by using an enzyme derived from the cereal raw material or the like, or by utilizing a separately added enzyme. The temperature and the time when the saccharification treatment is conducted may be appropriately controlled in consideration of the type of the cereal raw material used, the ratio of the cereal raw material to the whole fermentation raw material, the type of the enzyme added, the amount of the mixture, the quality of the intended fermented beer-like sparkling beverage or the like. For example, the saccharification treatment may be carried out by a conventional method such as holding a mixture containing cereal raw materials and the like at 35°C to 70°C for 20 minutes to 90 minutes.

A fermented beer-like sparkling beverage having a desired flavor can be produced by suitably adding herbs or the like prior to the boiling treatment or during the boiling treatment. Particularly, hops are preferably added prior to the boiling treatment or during the boiling treatment. In the case where the boiling treatment is conducted in the presence of hops, flavor/aroma components of the hops can be efficiently extracted. The addition amount of the hops, the method of addition (for example, divided over several additions), and boiling conditions may be appropriately determined.

### [Transferring step of fermentation raw material solution]

In the production method according to the present embodiment, a fermentation raw material solution prepared by plural preparation steps is subjected to a single fermentation step using a fermenter having a capacity at least twice as large as the capacity of a preparation tank. That is, the fermentation raw material solution prepared by the preparation steps is transferred to the fermenter. In the production method according to the present embodiment, a cylindro-conical tank (having a capacity of 280 kL to 500 kL, for example) is preferably used.

In the production method according to the present embodiment, the number (n) of times of injecting the fermentation raw material solution into the fermenter may be at least twice, and may be determined by the difference in capacities of the fermenter and the preparation tank. For example, the number may be at least three times, three times to six times, or three times to five times.

Although the amounts of the fermentation raw material solution injected to the fermenter at the first injection step to the n^{th} injection step, that is, the amounts of the first batch to the n^{th} batch, may be different from each other, in the production method according to the present embodiment, it is preferable that the amounts be substantially equal amounts from the viewpoint of conducting uniform fermentation. The phrase "the amounts of the first batch to the n^{th} batch are substantially equal amounts" refers to a state in which the volumes of the first batch to the n^{th} batch are equal amounts or the difference in the volumes of the first batch to the n^{th} batch is within a negligible error range of approximately ±5% by volume of the volumes.

In the transferring step of the production method according to the present embodiment, the removal of residues (coagulates) from the fermentation raw material solution, the aeration treatment by which oxygen required to propagate yeasts is supplied to the fermentation raw material solution, and the addition of the yeast are conducted.

Although the removal of residues such as proteins produced by precipitation from a broth (fermentation raw material solution) prepared in the preparation step may be conducted by any solid-liquid separation treatment, precipitates (hot breaks) are generally removed using a tank called as whirlpool. The temperature of the broth at the time is generally and approximately 50°C to 95°C. The fermentation raw material solution from which the hot breaks are removed is cooled to a temperature suitable for fermentation using a heat exchanger such as a plate cooler.

In the production method according to the present embodiment, the residues (cold breaks) generated by cooling are also removed from the fermentation raw material solution. The removal of the cold breaks may be conducted, for example, by using a flotation tank. The fermentation raw material solution from which the cold breaks are removed may be charged into a fermenter directly or after adjusting the extra concentration to a desired concentration.

Air used to conduct aeration during the transferring step is an oxygen source of the yeast. Therefore, the constitution of the air may be any, provided that oxygen is contained, and may be the constitution of standard atmosphere (composed of approximately 80% of nitrogen, approximately 20% of oxygen, and other gaseous components), for example.

In the production method according to the present embodiment, the fermentation raw material solution from which the cold breaks are removed is subjected to aeration before injecting into the fermenter. In the case where the fermentation raw material solution is directly injected into the fermenter in the "multi-filling" process, the fermentation raw material solution is not uniformly mixed in the fermenter, and the state of fermentation becomes non-uniform in the fermenter. In the case where the fermentation raw material solution is injected into the fermenter while containing air injected thereinto by aeration, the fermentation raw material solution is easily mixed with the fermentation raw material solution previously injected into the fermenter. Aeration may also be conducted before removing a cold break.

In the production method according to the present embodiment, the yeast is not added to the fermenter, but added to the fermentation raw material solution during the transferring step to the fermenter so as to mix the yeast with the fermentation raw material solution as uniformly as possible. The yeast may be added to the fermentation raw material solution at any time from a time when the temperature of the fermentation raw material solution decreases to a temperature range in which the yeast can survive to a time before the fermentation raw material solution is injected into the fermenter.

A certain amount of oxygen is required by the yeast to allow favorable alcoholic fermentation to proceed according to the desired flavor of the fermented beer-like sparkling beverage. It is preferable that aeration be conducted before adding the yeast, after adding the yeast, or along with the addition of the yeast so as to allow the yeast to contact sufficiently with oxygen in the fermentation raw material solution. For example, the yeast may be added before or after aeration conducted before injecting into the fermenter or the flotation tank. It is preferable that the total amount of the yeast required by a single fermentation step be added to the fermentation raw material solution dividedly by several addition steps, rather than by a single addition step so as to make the amount of oxygen which contacts with each yeast cell satisfactory. Therefore, the yeast is added to all batches of fermentation raw material solution excepting the n^{th} batch, before injection into the fermenter in the production method according to the present embodiment.

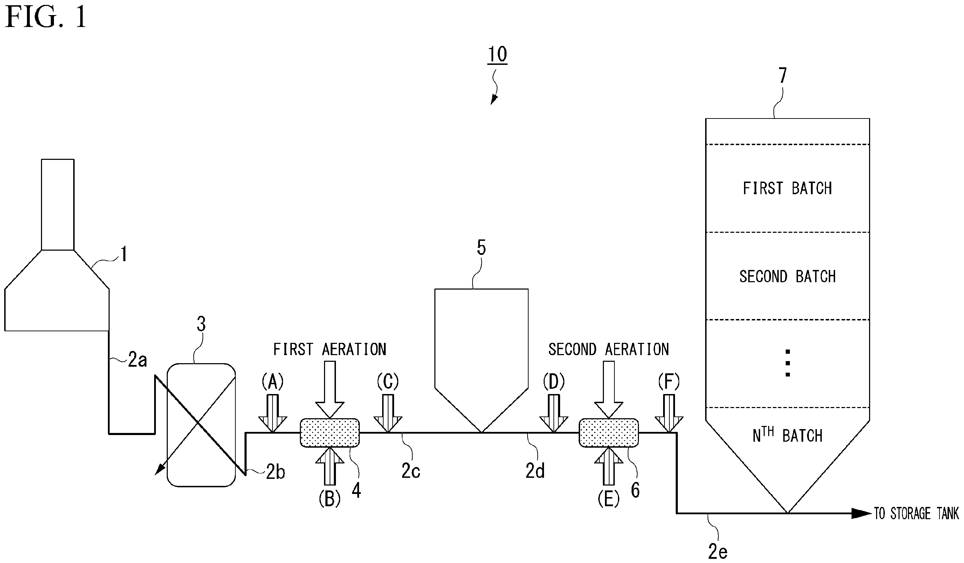

The transferring step may be conducted using a part 10 of a beer brewing device in which a first aeration device 4, a flotation tank 5 and a second aeration device 6 are connected in this order on a downstream side of a heat exchanger 3 and an upstream side of a fermenter 7, as shown in Fig. 1. Hereinafter, the first aeration device 4, the flotation tank 5 and the second aeration device 6, located on the downstream side of the heat exchanger 3 and connected to the upstream side of the fermenter 7, and pipes connecting them may be collectively referred to as "fermentation raw material solution transferring system".

In the heat exchanger 3, the fermentation raw material solution is cooled to an appropriate fermentation temperature.

In the first aeration device 4, air is injected into the fermentation raw material solution. A coagulate (cold break) in the fermentation raw material solution cooled by the heat exchanger is efficiently floated by first aeration. In addition, oxygen can be dissolved in the fermentation raw material solution. The first aeration may be conducted or may not be conducted.

In the flotation tank 5, the coagulate (cold break) in the cooled fermentation raw material solution is separated. In the case where the yeast is added before the flotation tank 5, for example, the yeast is activated in the flotation tank 5 by consuming oxygen dissolved in the fermentation raw material solution by air injected by the first aeration device 4.

In the second aeration device 6, air is injected into the fermentation raw material solution after a cold break is removed therefrom. Thus, the fermentation raw material solution to be injected into the fermenter 7 after removing a cold break therefrom and the fermentation raw material solution which has been already injected into the fermenter 7 can be sufficiently stirred, thereby allowing uniform fermentation to proceed in the fermenter. In addition, a sufficient amount of oxygen can be dissolved in the fermentation raw material solution.

In the case where the yeast is added before the flotation tank 5, for example, oxygen dissolved in the fermentation raw material solution by air injected in the first aeration device 4 is reduced due to consumption by the yeast in the flotation tank 5. A sufficient amount of oxygen can be supplied to the yeast by additionally injecting air to the fermentation raw material solution using the second aeration device 6.

In the fermenter 7, alcoholic fermentation is conducted by the yeast using the fermentation raw material solution as a substrate.

A boiling tank (not shown in drawings) in which the fermentation raw material solution is boiled and a whirlpool 1 in which a coagulate (hot break) generated in the fermentation raw material solution by conducting heating is separated may be further disposed in this order at the upstream side of the heat exchanger 3 in the beer brewing device to be used in the production method according to the present embodiment.

Pumps configured to transfer the fermentation raw material solution by pressure to pipes between the boiling tank and the whirlpool 1, between the whirlpool 1 and the heat exchanger 3, and between the flotation tank 5 and the fermenter 7may be further disposed in the beer brewing device to be used in the production method according to the present embodiment.

A static mixer configured to stir injected air and the fermentation raw material solution to aid the dissolution may be further disposed at the downstream side of the first aeration device 4 but at the upstream side of the flotation tank 5 in the beer brewing device to be used in the production method according to the present embodiment. In addition, the static mixer may be further disposed at the downstream side of the second aeration device 6 but at the upstream side of the fermenter 7.

Although Fig. 1 indicates the case in which one line of the fermentation raw material solution transferring system is connected to the fermenter 7, at least two lines of the fermentation raw material solution transferring system may be connected to the fermenter 7. In the case where at least two lines of the fermentation raw material solution transferring system are connected, the fermentation raw material solution can be injected into the fermenter 7 further efficiently.

The method for injecting the fermentation raw material solution into the fermenter 7 using a device shown in Fig. 1 will be described below.

A fermentation raw material solution cooled in a heat exchanger 3 is transferred to a first aeration device 4 via a pipe 2b to inject air thereinto.

Then, the fermentation raw material solution after first aeration is injected into a flotation tank 5 via a pipe 2c, and then left to stand. The time period for leaving to stand may be, for example, 0 minutes to 5 hours, or 30 minutes to 3 hours. In the case where the time period for leaving to stand is within the above-mentioned range, a cold break is allowed to float on the surface of the fermentation raw material solution, and thus to be removed from a fermentation raw material solution by extracting the fermentation raw material solution from the bottom of the flotation tank.

Then, the fermentation raw material solution from which the cold break is removed is transferred to a second aeration device 6 via a pipe 2d, and then air is injected thereinto. The fermentation raw material solution to be injected into the fermenter 7 after removing a cold break therefrom can be sufficiently stirred with the fermentation raw material solution previously injected into the fermenter 7 by conducting the second aeration, and thus uniform fermentation is allowed to proceed. In addition, oxygen is dissolved in the fermentation raw material solution, and the oxygen is consumed by a yeast in the fermenter 7.

Then, the fermentation raw material solution in which air is injected is injected into the fermenter 7 via a pipe 2e.

There is no particular limitation on the amount of air aerated by the first aeration and that of the second aeration. For example, the amount of the aerated air may be 4% by volume to 10% by volume, and preferably 5% by volume to 9% by volume, relative to the flow rate of the fermentation raw material solution flowing in each aeration device. The amount of dissolved oxygen in the aerated fermentation raw material solution can be controlled to 0.6 ppm to 6.0 ppm by injecting air such that the above-mentioned flow rate ratio is realized. The amount of the dissolved oxygen may be measured using a dissolved oxygen analyzer. In the present specification, "ppm" indicates "mg/L".

The time interval between the steps of injecting each batch of the fermentation raw material solution to the fermenter at the first injection step to the n^{th} injection step is preferably 5 hours or less, more preferably 3 hours or less, and even more preferably 2 hours or less. In the case where the time interval between the injection steps is the above-mentioned upper limit or less, the time period required to produce a fermented beer-like sparkling beverage can be shortened, and oxygen is supplied to a yeast at appropriate timings in an initial fermentation stage by supplying, at short time intervals, the fermentation raw material solution provided with a sufficient amount of oxygen by aeration, thereby activating the yeast. The yeast activated at appropriate timings consumes oxygen in a further shortened cycle, thereby allowing the effects of the production method according to the present embodiment to be achieved sufficiently.

A yeast is added to each of the first batch to n-1^{th} bath of the fermentation raw material solution.

The yeast may be added at any timing before injecting into the fermenter, and may be any timing of (A) to (F) shown in Fig. 1. Among these, the yeast is preferably added to the fermentation raw material solution before injecting into a flotation tank, since the yeast can be in contact with oxygen as long as possible and can be activated further efficiently. In the case where the first aeration is conducted, the yeast is preferably added at a timing of (A), (B) or (C), that is, the first aeration is preferably conducted before injecting into the flotation tank but before adding the yeast, along with the addition of the yeast, or after adding the yeast, and the yeast is more preferably added at a timing of (C), that is, the first aeration is more preferably conducted before adding the yeast.

In contrast, as the n^{th} batch, the fermentation raw material solution is cooled in the heat exchanger 3, injected into the flotation tank 5 via a pipe 2b and a pipe 2c, and then left still. At the time, the first aeration may be conducted, or may not be conducted. It is preferable that the first aeration not be conducted from the viewpoint of a decrease in dissolved oxygen in the fermentation raw material solution.

Then, the fermentation raw material solution from which a cold break is removed is transferred to the second aeration device 6 via a pipe 2d, and air is injected thereinto. The fermentation raw material solution to be injected into the fermenter 7 after removing a cold break therefrom can be sufficiently stirred with the fermentation raw material solution previously injected into the fermenter 7 by conducting the second aeration, and thus uniform fermentation is allowed to proceed. In addition, oxygen can be supplied in the amount required by the yeast present in the fermenter, a sufficient amount of dissolved oxygen can be maintained when all batches of the fermentation raw material solution have been injected into the fermenter, while reducing the dissolved oxygen in the fermentation raw material solution at an initial fermentation stage, and the rate of fermentation by the yeast can be maintained favorably. In addition, an excess increase in acetic acid esters or the like, due to the decrease in oxygen supplied to the yeast, and the change in generation of aroma components, such as generation of substances causing an unpleasant odor, can be suppressed.

Then, the aerated fermentation raw material solution is injected into the fermenter 7 via a pipe 2e.

In the production method according to the present embodiment, no yeast is added to the n^{th} bath, and the entire amount of the yeast required by fermentation is added to the first batch to the (n-1)^{th} batch. Thus, the yeast concentration in the fermenter at an initial fermentation stage, specifically, until just before the n^{th} batch is injected into the fermenter, can be enhanced in comparison with the case where a yeast equivalent addition method is conducted. Dissolved oxygen in the fermenter is efficiently consumed by the high concentration of the yeast, and thus the amount of dissolved oxygen to be supplied to generate EMBal decreases. Thus, the concentration of EMBal generated in the fermenter decreases, thereby reducing the concentration of 2M3MB contained in the final fermented beer-like sparkling beverage.

Although the amounts of the yeast to be added to the batches from the first batch to the (n-1)^{th} batch may be different from each other, it is preferable that the amounts be substantially equal amounts. In the case where the amounts are substantially equal amounts, the yeast can contact evenly with oxygen, and be activated further efficiently, and thus fermentation is allowed to proceed uniformly. The phrase " the amounts of the yeast are substantially equal amounts" refers to the state in which the amounts of the yeast (the yeast concentrations) are equal amounts (isoconcentration), or the differences in the amounts of the yeast (yeast concentrations) are within a negligible error range of approximately ±5% by mass of the amounts (concentrations).

### [Fermentation step]

Then, fermentation is conducted in a fermentation step using the fermentation raw material solution which is injected into the fermenter and to which the yeast is added. The yeast to be used to conduct fermentation is not particularly limited, and may be appropriately selected from yeasts generally used to prepare brews. Although the yeast may be a top-fermenting yeast or a bottom-fermenting yeast, the bottom-fermenting yeast is preferable because the bottom-fermenting yeast is readily applied to large-scale brewing facilities. The fermentation temperature is not particularly limited, and, for example, fermentation may be conducted at 0°C to 15°C, and preferably at 4°C to 12°C.

### [Brew storage step]

In a brew storage step after the fermentation step, the resultant fermentation solution is matured in a brew storage tank and then stored at a low temperature of approximately 0°C to stabilize the resultant fermentation solution.

### [Filtration step]

In a filtration step after the brew storage step, the matured fermentation solution is subjected to filtration to remove the yeast and proteins undissolved in the temperature range therefrom, thereby obtaining a target fermented beer-like sparkling beverage. The filtration treatment may be conducted by any techniques that can remove yeast by filtration, such as diatomaceous earth filtration, or filter-filtration using a filter having an average pore size of approximately 0.4 µm to 0.6 µm or the like.

### Examples

Although the present invention will be explained with reference to examples and comparative examples, the present invention is not limited to the following examples and the like.

### <Various measurement method>

### [Measurement method of 2M3MB concentration in fermented beer-like sparkling beverage]

In the following examples and the like, the concentration of 2M3MB in a fermented beer-like sparkling beverage is measured in accordance with the method of lijima et al., (Non-Patent Document 4).

Specifically, 25 mL of 2 mM p-hydroxy mercury benzoic acid (p-HMB), 20 mM tert-butyl-4-methoxyphenol (BHA) dissolved in 500 µL of tris buffer (0.1M tris), and 100 µL of a solution of 500 mg/mL 4-methoxy-2-methyl-2-mercaptobutane (4M2M2MB) were added to 500 mL of a fermentation solution, and then sealed, followed by stirring the mixture vigorously using a stirrer to bond a sulfur-containing compound in the fermentation solution with the p-HMB. The 4M2M2MB was added as an internal standard substance. The bonded reactant was adsorbed to Dowex-1 (strong anion exchange resin), followed by washing the resin with 100 mL of 0.1 M acetic acid buffer (pH 6) containing 0.2 mM BHA.

Then, the sulfur-containing compound was eluted from the resin using 100 mL of 0.1 M sodium acetate buffer (pH 6) containing 10 mg/mL L-cysteine hydrochloride. The resultant eluate was subjected to solvent extraction twice using a solution of 0.5 mL ethyl acetate and 5 mL dichloromethane, followed by subjecting to the resultant organic solvent layer to dehydration using anhydrous sodium sulfate. The dehydrated organic solvent layer was concentrated at room temperature under a nitrogen stream to obtain a volume of 100 µL, followed by quantifying the sulfur-containing compound contained in the organic solvent layer by GC/MS.

### (GC/MS conditions)

Gas chromatograph: "Agilent 6890 gas chromatograph" (manufactured by Agilent Technologies, Inc.)
Detector: "MSD 5975" (manufactured by Agilent Technologies, Inc.)
Column: "DB-WAX capillary column" (lenght: 60 m, inner diameter: 0.25 mm, film thickness: 0.25 µm, manufactured by Agilent Technologies, Inc.)
Inlet temperature: 250°C
Injection mode: Pulsed splitless injection mode
Injection amount: 1 µL
Carrier gas: helium (1 mL/minute)
Column temperature setting: 40°C (maintained for 5 minutes) - (5°C/minute) - 160°C (for 5 minutes)
Ionized condition: 70 eV
Measurement mode: single ion-monitoring (SIM) mode
Quantitation: Comparison of the peak area of 2M3MB with the peak area of the internal standard substance was conducted.

### [Measurement method of 2,3-epoxy-3-methylbutanal (EMBal) (2M3MB precursor) concentration in fermentation raw material solution]

In the following examples and the like, the concentration of 2,3-epoxy-3-methylbutanal (EMBal) in a fermentation raw material solution was measured as described below.

20 g of a fermentation raw material solution to which a stable isotope of EMBaL (D6-2,3-epoxy-3-methylbutanal) was added as an internal standard substance in an amount of 100 ppb was loaded onto a solid-phase extraction column (anion exchange column "InertSep MA-1" manufactured by GL Science Co., Ltd.) conditioned with methanol and water. A liquid that passed through the solid-phase extraction column was collected, followed by adding 3 mL of dichloromethane to the liquid to subject the mixture to extraction, thereby collecting a solvent layer. The solvent extraction procedure was repeated 3 times, and 5 g of anhydrous sodium sulfate was added to the mixture of all of the collected solvent layers, followed by subjecting the mixture to dehydration for 30 minutes or longer. Thereafter, the resultant was concentrated to about 500 µL with a nitrogen purge. Then, quantitation was conducted by comparing the peak area of EMBal with the peak area of the internal standard substance, and the measurement was performed by GC/MS under the same conditions as those in the above-mentioned 2M3MB.

### [Measurement method of apparent extract at an end of fermentation]

The "apparent extract" refers to the extract of the fermented beer-like sparkling beverage, indicated by the sucrose concentration (usually in terms of % by mass) of an aqueous solution of sucrose having the same specific gravity as the fermented beer-like sparkling beverage at 20°C.

The specific gravity of a fermentation solution from which a yeast was removed at an end of fermentation was measured at 20°C, and calculated as an apparent extract at an end of fermentation (%P) by being replaced with the sucrose concentration (usually in terms of % by mass) of an aqueous solution of sucrose having the same specific gravity at 20°C. "P" refers to a value calculated in accordance with a plato conversion table.

### [Measurement method of time required by extract to reach 2%P]

The apparent extract of the fermentation solution was calculated over time using the calculation method of the apparent extract described in the "Measurement method of apparent extract at an end of fermentation" above, and the time when the apparent extract reached 2% P was measured.

### [Measurement method of ethyl acetate concentration and isoamyl acetate concentration]

In the following examples and the like, the ethyl acetate concentration and the isoamyl acetate concentration were measured as mentioned below.

6.0 g of ammonium sulfate was placed in a centrifuge tube having a capacity of 50 mL, and then 30 g of an ice-cooled fermentation solution was added thereto, followed by ice-cooling the mixture immediately. Then, an internal standard substance was put into the centrifuge tube, followed by adding 3.0 mL of a carbon disulfide solution thereto. Then, the centrifuge tube was shaken at 200 rpm for 10 minutes, followed by conducting centrifugation to collect a carbon disulfide layer. 0.5 mL of the collected carbon disulfide solution was subjected to gas chromatography, thereby detecting ethyl acetate and isoamyl acetate to quantify the concentrations thereof.

### [Measurement method of isoamyl alcohol concentration]

In the following examples and the like, the concentration of isoamyl alcohol was measured by the same method as the analysis method defined in Reference Document 1 ("ASBC Methods of Analysis" (American Society of Brewing Chemists. Method of Analysis, 8th edition. Stastical Analysis-4 Youden unit block collaborative testing procedure. The society, St. Paul. MN. (1992))). Specifically, 6.0 g of ammonium sulfate was placed in a centrifuge tube having a capacity of 50 mL, and then 30 g of an ice-cooled sample beer was added thereto, followed by ice-cooling the mixture immediately. Then, an internal standard substance (n-butyl alcohol) was added to the centrifuge tube, followed by adding 3.0 mL of a carbon disulfide solution thereto. Then, the centrifuge tube was shaken at 200 rpm for 10 minutes, followed by conducting centrifugation to collect a carbon disulfide layer. 0.5 mL of the collected carbon disulfide solution was subjected to gas chromatography to detect isoamyl alcohol and quantify the concentration thereof.

### [Measurement method of SO₂ concentration]

In the following examples and the like, the concentration of SO₂ was measured using a measurement kit under the trade name of "F kit" (manufactured by JK International Co., Ltd) in accordance with the instruction for use thereof.

### <Production test of fermented beer-like sparkling beverage>

### [Test Example 1]

### (1) Preparation and transfer of fermentation raw material solution

14,600 kg of malt, 4,800 kg of auxiliary raw material, and 77 kL of water were mixed, and the mixture was maintained at 50°C for 30 minutes, subjected to proteolytic treatment, and then maintained at 65°C for 70 minutes to saccharify components derived from the malt. The resultant wort was subjected to filtration, and hop were added to the resultant filtrate and then the mixture was boiled for 90 minutes. After boiling, concentration-adjusting hot water was added to the resultant to adjust the concentration of the fermentation raw material solution.

The resultant fermentation raw material solution was transferred using a device shown in Fig. 1. A hot break such as a hop residue was separated from the fermentation raw material solution in a whirlpool 1, and then the fermentation raw material solution was passed through a heat exchanger 3 to cool the fermentation raw material solution to 5°C. In addition, the cooled fermentation raw material solution was transferred to a fermenter (capacity: 280 kL) under the conditions shown in the following Table 1, to conduct a beer brewing test. A yeast was added at the timing (C) shown in Fig. 1. 70 kL of the fermentation raw material solution preparation was prepared by each preparation step. Since the preparation step was repeated 4 times, the total amount of the fermentation raw material solution used in each test was 280 kL. The time interval between the preparation steps was 1 hour and 20 minutes.

The concentration of the yeast used was approximately 25 × 10⁶ cells/mL. Each condition was tested twice using the same yeast.

**Table 1**

| | | Comparative Example 1-1 Comparative Example 1-2 | Example 1 | Example 2 |
|---|---|---|---|---|
| First preparation step to third preparation step | Amount of added yeast (L) | 750 | 1000 | 1000 |
| | First aeration Top: (Nm³/h) Bottom: (% (flow rate ratio of fermentation raw material solution) | 5.5 (8.2) | 5.5 (8.2) | 5.5 (8.2) |
| | Second aeration | 4.5 (6.7) | 4.5 (6.7) | 4.5 (6.7) |
| | Top: (Nm³/h) | | | |
| | Bottom: (% (flow rate ratio of fermentation raw material solution) | | | |
| Fourth preparation step | Amount of added yeast (L) | 750 | 0 | 0 |
| | First aeration | 5.5 (8.2) | 5.5 (8.2) | 0 (0) |
| | Top: (Nm³/h) | | | |
| | Bottom: (% (flow rate ratio of fermentation raw material solution) | | | |
| | Second aeration | 4.5 (6.7) | 4.5 (6.7) | 4.5 (6.7) |
| | Top: (Nm³/h) | | | |
| | Bottom: (% (flow rate ratio of fermentation raw material solution) | | | |

### (2) Measurement of dissolved oxygen in the fermentation raw material solution in a fermenter at each completion of injection of the fermentation raw material solution prepared by each preparation step

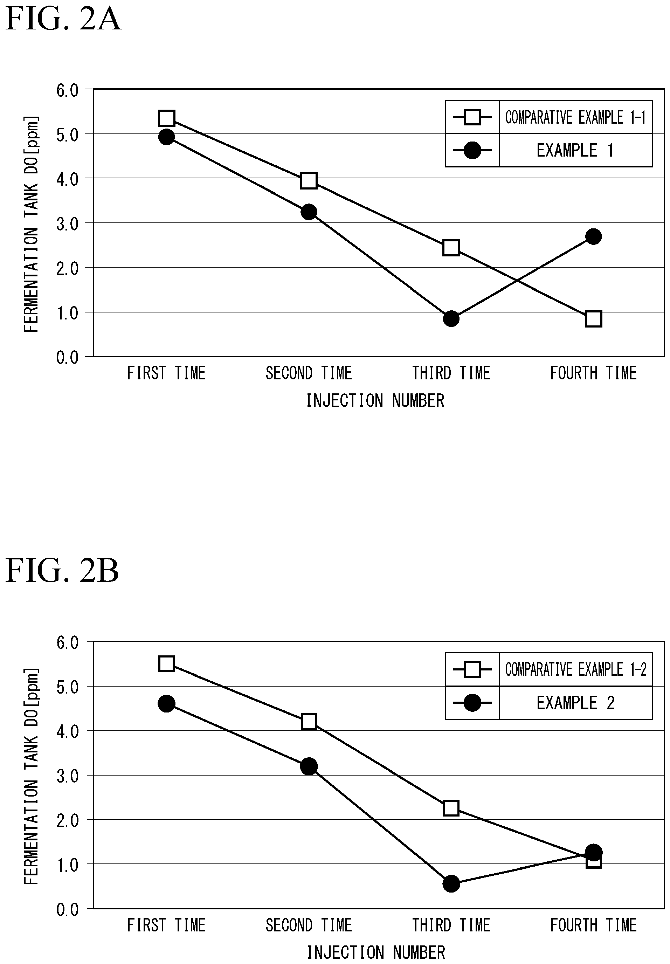

Next, the amount of dissolved oxygen (DO) (ppm) in the fermentation raw material solution in a fermenter at each completion of injection of the fermentation raw material solution prepared by each preparation step was measured using a dissolved oxygen analyzer (manufactured by Mettler Toledo Co., Ltd.). The results are shown in Table 2, Fig. 2A and Fig. 2B. In order to compare Comparative Example 1-1 with Example 1, and Comparative Example 1-2 with Example 1-2, Comparative Examples 1-1 and 1-2 were performed in parallel with Examples 1 and 2, respectively. The same test was repeated twice to measure the amounts of dissolved oxygen and the average values thereof were calculated and are shown in the following Table 2, Fig. 2A and Fig. 2B.

**Table 2**

| DO (ppm) | Comparative Example 1-1 | Example 1 | Comparative Example 1-2 | Example 2 |
|---|---|---|---|---|
| First injection step | 5.4 | 5.0 | 5.5 | 4.6 |
| Second injection step | 4.0 | 3.3 | 4.2 | 3.2 |
| Third injection step | 2.5 | 0.9 | 2.3 | 0.6 |
| Fourth injection step | 0.9 | 2.7 | 1.1 | 1.3 |

As shown in Table 2, Fig. 2A and Fig. 2B, the amount of dissolved oxygen (DO) was decreased after every completion of injection of the fermentation raw material solution prepared by each preparation step in Comparative Example 1-1 and Comparative Example 1-2. In contrast, the amount of DO in Example 1 and Example 2 was lower than that in Comparative Example 1-1 and Comparative Example 1-2, respectively, until the first injection step to the third injection step. It was assumed that the lower amount was caused by rapid oxygen consumption due to the high yeast concentration (4/3 times higher than that in Comparative Example 1-1 and Comparative Example 1-2) in the fermenter until the first injection step to the third injection step.

In addition, the amount of DO at the fourth injection step in Example 1 was higher than that in Comparative Example 1-1. It was assumed that the higher amount was caused by injecting air into the fermentation raw material solution for the fourth injection step by the first aeration step and the second aeration step without adding yeast thereto, thereby allowing oxygen to be injected into the fermenter without being consumed.

In contrast, although the amount of DO in Example 2 at the fourth injection step was larger than that at the third injection step, the increased amount was small. It was assumed that the small increase was caused by conducting only the second aeration step without conducting both the first aeration step and the yeast-addition step, thereby allowing the amount of DO to be increased only by the second aeration.

It was confirmed from the above-shown results that the amount of DO at the completion of the fourth injection step, that is, at the end of injection, in Example 2 was approximately equivalent to that in Comparative Example 1-2.

### (3) Measurement of EMBal concentration at completion of injection and 2M3MB concentration at end of fermentation

A portion of the fermentation raw material solution was sampled at the completion of injection of the fermentation raw material solution to a fermenter, and the concentration of EMBal was measured by the above-mentioned measurement method.

Then, the fermentation raw material solution was fermented at 12°C for 7 days, and the resultant fermentation solution after the end of fermentation was sampled and then subjected to centrifugation (at 7000 rpm for 15 minutes) to remove yeast therefrom, followed by measuring the concentration of 2M3MB causing a green onion odor at the end of fermentation by the above-mentioned measurement method.

Measurement results of the EMBal concentration (ppb) and the 2M3MB concentration (ppb) are shown in Table 3 (EMBal) and Table 4 (2M3MB), respectively. In Table 3 and Table 4, the measurement results obtained by conducting the same test twice are shown as "first time" and "second time", respectively, and an average of the results indicated as the "first time" and the "second time" is shown as "average".

**Table 3**

| EMBal concentration (ppb) | Comparative Example 1-1 | Example 1 | Comparative Example 1-2 | Example 2 |
|---|---|---|---|---|
| First time | 4.3 | 4.0 | 4.4 | 3.4 |
| Second time | 3.8 | 3.8 | 4.5 | 3.8 |
| Average | 4.0 | 3.9 | 4.5 | 3.6 |

**Table 4**

| 2M3MB concentration (ppb) | Comparative Example 1-1 | Example 1 | Comparative Example 1-2 | Example 2 |
|---|---|---|---|---|
| First time | 0.28 | 0.26 | 0.31 | 0.22 |
| Second time | 0.40 | 0.36 | 0.36 | 0.25 |
| Average | 0.34 | 0.31 | 0.34 | 0.23 |

As shown in Table 3 and Table 4, the EMBal concentration at the completion of injection of the fermentation raw material solution to a fermenter in Example 1 was approximately equivalent to that in Comparative Example 1-1. In contrast, the EMBal concentration in Example 2 was lower by 20% than that in Comparative Example 1-2.

In addition, although it was confirmed that the 2M3MB concentration at the end of fermentation in Example 1 and Example 2 was decreased compared to that in Comparative Example 1-1 and Comparative Example 1-2, respectively, the 2M3MB concentration in Example 1 was decreased by approximately 10%, while the 2M3MB concentration in Example 2 was decreased by approximately 30%.

### (4) Physical properties other than 2M3MB at the end of fermentation

The apparent extract at an end of fermentation (unit: %P), the time required by extract to reach 2%P (unit: hour), the ethyl acetate concentration (ppm), the isoamyl acetate concentration (ppm), the isoamyl alcohol concentration (ppm) and the SO₂ concentration (ppm) were measured as physical properties other than 2M3MB at the end of fermentation. Results are shown in Table 5. In Table 5, the measurement results obtained by conducting the same test twice are shown as "first time" and "second time", respectively, and an average of the results indicated as the "first time" and the "second time" is shown as "average".

**Table 5**

| | | Comparative Example 1-1 | Example 1 | Comparative Example 1-2 | Example 2 |
|---|---|---|---|---|---|
| Apparent extract at end of fermentation (%P) | First time | 1.79 | 1.72 | 1.81 | 1.74 |
| | Second time | 1.70 | 1.67 | 1.71 | 1.72 |
| | Average | 1.75 | 1.70 | 1.76 | 1.73 |
| Time required by extract to reach 2%P (Hour) | First time | 121 | 119 | 128 | 120 |
| | Second time | 123 | 115 | 122 | 118 |
| | Average | 122 | 117 | 125 | 119 |
| Ethyl acetate concentration (ppm) | First time | 15.3 | 15.5 | 15.5 | 15.4 |
| | Second time | 17.3 | 17.5 | 21.6 | 20.2 |
| | Average | 16.3 | 16.5 | 18.6 | 17.8 |
| Isoamyl acetate concentration (ppm) | First time | 1.4 | 1.4 | 1.4 | 1.4 |
| | Second time | 1.5 | 1.6 | 1.8 | 1.7 |
| | Average | 1.5 | 1.5 | 1.6 | 1.6 |
| Isoamyl alcohol concentration (ppm) | First time | 67.9 | 71.3 | 67.1 | 67.7 |
| | Second time | 72.9 | 74.1 | 73.2 | 73.1 |
| | Average | 70.4 | 72.7 | 70.2 | 70.4 |
| SO₂ concentration (ppm) | First time | 3.65 | 3.54 | 3.79 | 3.78 |
| | Second time | 3.55 | 3.32 | 2.42 | 2.32 |
| | Average | 3.60 | 3.43 | 3.10 | 3.05 |

It was confirmed from the results of "apparent extract at end of fermentation" and "time required by extract to reach 2%P", which indicate the state of extract consumption at the time of fermentation, shown in Table 5, that the extract consumption (fermentation) in Example 1 and Example 2 was not delayed and was improved, compared to those in Comparative Example 1-1 and Comparative Example 1-2.

The differences between Example 1 and Comparative Example 1-1 and between Example 2 and Comparative Example 1-2, in terms of both the ethyl acetate concentration and the isoamyl acetate concentration, were smaller than errors between the tests, respectively, and thus it was suggested that the test conditions of Example 1 and Example 2 had a small influence on the generation of aroma components such as acetic acid esters. In addition, although it was confirmed that the isoamyl alcohol, which is a higher alcohol that serves as a substrate of isoamyl acetate, was increased by the test conditions of Example 1, the increased amount was smaller than an error between the tests.

The SO₂ concentration was considered to negatively correlate with oxygen consumption by the yeast, in a similar manner to the acetic acid esters concentration. It was confirmed that the SO₂ concentration in Example 1 was decreased, which indicated that the oxygen consumption by the yeast was increased compared to that in Comparative Example 1-1.

It was confirmed from the above-mentioned results that the fermentation rate was improved by the test conditions of Example 1 and Example 2, compared to those in Comparative Example 1-1 and Comparative Example 1-2, and thus a fermented beer-like foamed beverage in which the amount of 2M3MB was reduced was obtained. In addition, it was confirmed that the generation of aroma components under the test conditions of Example 2 was equivalent to that under the test conditions of Comparative Example 1-2.

### [Test Example 2]

### (1) Preparation and transfer of fermentation raw material solution

A wort was prepared by the same method as that in Test Example 1. The prepared fermentation raw material solution was transferred using a device shown in Fig. 1. A hot break such as a hop residue was separated from the fermentation raw material solution in a whirlpool 1, and then the fermentation raw material solution was passed through a heat exchanger 3 to cool the fermentation raw material solution to 5°C. In addition, the cooled fermentation raw material solution was transferred to a fermenter (capacity: 500 kL) under the conditions shown in the following Table 6, to conduct a beer brewing test. A yeast was added at the timing (C) shown in Fig. 1, that is, after the first aeration step but before the injection step to a flotation tank. 125 kL of the fermentation raw material solution was prepared by each preparation step. Since the preparation step was repeated 4 times, the total amount of the fermentation raw material solution used in each test was 500 kL. The time interval between the preparation steps was 1 hour and 50 minutes.

The concentration of the yeast used was approximately 17 × 10⁶ cells/mL. In Example 3 and Comparative Example 3, the test using the same yeast was repeated twice, respectively. Conditions of Comparative Example 2 are shown for reference.

**Table 6**

| | | Comparative Example 2 | Example 3 | Comparative Example 3 |
|---|---|---|---|---|
| First preparation step to third preparation step | Amount of added yeast (L) | 1370 | 1802 | 1780 |
| | First aeration (% (flow rate ratio of fermentation raw material solution) | 9.0 | 9.0 | 9.0 |
| | Second aeration (% (flow rate ratio of fermentation raw material solution) | 5.5 | 5.5 | 5.5 |
| Fourth preparation step | Amount of added yeast (L) | 1145 | 0 | 0 |
| | First aeration (% (flow rate ratio of fermentation raw material solution) | 9.0 | 0 | 0 |
| | Second aeration (% (flow rate ratio of fermentation raw material solution) | 5.5 | 7.5 | 0 |

### (2) Measurement of 2M3MB concentration in fermenter at end of fermentation

The fermentation raw material solution injected into a fermenter was fermented at 12°C for 7 days, and the resultant fermentation solution after the end of fermentation was sampled and then subjected to centrifugation (at 7000 rpm for 15 minutes) to remove yeast therefrom, followed by measuring the concentration of 2M3MB at the end of fermentation by the above-mentioned measurement method.

Measurement results of the 2M3MB concentration (ppb) are shown in Table 7. In Table 7, the measurement results obtained by conducting the same test twice are shown as "first time" and "second time", respectively, and an average of the results indicated as the "first time" and the "second time" is shown as "average".

**Table 7**

| 2M3MB concentration (ppb) | Example 3 | Comparative Example 3 |
|---|---|---|
| First time | 0.50 | 0.36 |
| Second time | 0.30 | 0.27 |
| Average | 0.40 | 0.32 |

It was confirmed from Table 7 that the 2M3MB concentration in Comparative Example 3 was further decreased in comparison with that in Example 3. Thus, it was indicated that the omission of the second aeration step contributed to a reduction in the influence caused by contact of oxygen on the fermentation raw material solution.

### (3) Physical properties other than 2M3MB at the end of fermentation

The apparent extract at an end of fermentation (unit: %P), the time required by extract to reach 2%P (unit: hour), the ethyl acetate concentration (ppm), the isoamyl acetate concentration (ppm), the isoamyl alcohol concentration (ppm) and the SO₂ concentration (ppm) were measured as physical properties other than 2M3MB at the end of fermentation. Results are shown in Table 8. In Table 8, the measurement results obtained by conducting the same test twice are shown as "first time" and "second time", respectively, and an average of the results indicated as the "first time" and the "second time" is shown as "average".

**Table 8**

| | | Example 3 | Comparative Example 3 |
|---|---|---|---|
| Apparent extract at end of fermentation (%P) | First time | 1.76 | 1.94 |
| | Second time | 1.73 | 1.86 |
| | Average | 1.75 | 1.90 |
| Time required by extract to reach 2%P (Hour) | First time | 139 | 160 |
| | Second time | 139 | 156 |
| | Average | 139 | 158 |
| Ethyl acetate concentration (ppm) | First time | 17.9 | 21.8 |
| | Second time | 18.6 | 20.9 |
| | Average | 18.3 | 21.4 |
| Isoamyl acetate concentration (ppm) | First time | 1.6 | 1.9 |
| | Second time | 1.5 | 1.8 |
| | Average | 1.6 | 1.9 |
| Isoamyl alcohol concentration (ppm) | First time | 72.5 | 65.9 |
| | Second time | 66.9 | 61.8 |
| | Average | 69.7 | 63.9 |
| so₂ concentration (ppm) | First time | 2.51 | 3.64 |
| | Second time | 2.93 | 3.54 |
| | Average | 2.72 | 3.59 |

It was confirmed from the results of "apparent extract at end of fermentation" and "time required by extract to reach 2%P", which indicate the state of extract consumption at the time of fermentation, shown in Table 8, that the delay in fermentation in Comparative Example 3 was confirmed, compared to the fermentation in Example 3. It was assumed that the delay in fermentation is caused by insufficient supply of oxygen to the yeast by omitting the second aeration step at the fourth injection step and insufficient agitation against the fermentation raw material solution in the fermenter at the end of filling the fermenter with the fermentation raw material solution, thereby causing non-uniform fermentation.

Both the ethyl acetate concentration and the isoamyl acetate concentration were decreased in Example 3, compared to those in Comparative Example 3. In contrast, the isoamyl alcohol concentration was increased in Example 3, compared to that in Comparative Example 3. The SO₂ concentration was decreased in Example 3 in a similar manner to the concentrations of the acetic acid esters. These results indicated the decrease in oxygen in the fermentation raw material solution, and it was assumed that efficient consumption of oxygen in the fermentation raw material solution by the yeast under the test conditions in Example 3 allowed fermentation to proceed favorably.

Thus, it was confirmed that favorable fermentation proceeded under the test conditions in Example 3 and a fermented beer-like sparkling beverage in which the amount of 2M3MB was reduced was obtained.

### INDUSTRIAL APPLICABILITY

The method for producing a fermented beer-like sparkling beverage and the method for reducing off-flavor according to the present embodiment make it possible to provide a fermented beer-like sparkling beverage in which the amount of 2M3MB, which is the main causative substance of an onion-like off-flavor, is reduced while maintaining a favorable rate of fermentation by yeast.

### DESCRIPTION OF THE REFERENCE NUMERALS

- 1: Whirlpool (preparation tank)
- 2a, 2b, 2c, 2e: Pipe
- 3: Heat exchanger
- 4: First aeration device
- 5: Flotation tank
- 6: Second aeration device
- 7: Fermenter
- 10: A part of beer brewing device

## Claims

1. A method for producing a fermented beer-like sparkling beverage, comprising adding a yeast to a fermentation raw material solution, and then fermenting the fermentation raw material solution in a fermenter, wherein
a cold break is removed from the fermentation raw material solution in a flotation tank, the fermentation raw material solution is aerated, and then the fermentation raw material solution is injected into the fermenter dividedly by n injection steps (n is an integer of 2 or more), and
the yeast is added to the fermentation raw material solution to be injected into the fermenter at a first injection step to a (n-1)^{th} injection step.

2. The method for producing a fermented beer-like sparkling beverage according to claim 1, wherein the fermentation raw material solution to be injected into the fermenter at the first injection step to the (n-1)^{th} injection step is injected into the flotation tank after adding the yeast thereto, and is aerated before injecting into the flotation tank, and before, while, or after adding the yeast thereto.

3. The method for producing a fermented beer-like sparkling beverage according to claim 1 or 2, wherein 5% by volume to 9% by volume of an air, relative to the flow rate of the fermentation raw material solution, is injected into the fermentation raw material solution by aerating the fermentation raw material solution after removing the cold break and before injecting into the fermenter.

4. The method for producing a fermented beer-like sparkling beverage according to any one of claims 1 to 3, wherein n is an integer of at least 3.

5. The method for producing a fermented beer-like sparkling beverage according to any one of claims 1 to 4, wherein amounts of the fermentation raw material solution injected into the fermenter at the first injection step to an n^{th} injection step are substantially equal amounts.

6. The method for producing a fermented beer-like sparkling beverage according to any one of claims 1 to 5, wherein amounts of the yeast added to the fermentation raw material solution to be injected into the fermenter at the first injection step to the (n-1)^{th} injection step are substantially equal amounts.

7. The method for producing a fermented beer-like sparkling beverage according to any one of claims 1 to 6, wherein a time interval between steps of injecting the fermentation raw material solution into the fermenter is 5 hours or less.

8. A method for reducing an off-flavor from a fermented beer-like sparkling beverage, comprising: removing a cold break from a fermentation raw material solution in a flotation tank; aerating the fermentation raw material solution from which the cold break is removed; injecting the fermentation raw material solution, which is aerated, into the fermenter dividedly by n injection steps (n is an integer of 2 or more); and adding a yeast to the fermentation raw material solution to be injected into the fermenter at a first injection step to a (n-1)^{th} injection step.

9. The method for reducing an off-flavor from a fermented beer-like sparkling beverage according to claim 8, wherein the fermentation raw material solution to be injected into the fermenter at the first injection step to the (n-1)^{th} injection step is injected into the flotation tank after adding the yeast thereto, and is aerated before injecting into the flotation tank, and before, while, or after adding the yeast thereto.

10. The method for reducing an off-flavor from a fermented beer-like sparkling beverage according to claim 8 or 9, wherein a causative substance of the off-flavor is 2-mercapto-3-methyl-1-butanol.

11. The method for reducing an off-flavor from a fermented beer-like sparkling beverage according to claim 10, wherein an amount of the 2-mercapto-3-methyl-1-butanol in the fermented beer-like sparkling beverage, relative to a total mass of the fermented beer-like sparkling beverage, is reduced to 0.4 ppb or less.
